# EUROPEAN PATENT APPLICATION

(11) **EP 2 256 544 A1**
(43) Date of publication of application: **01.12.2010**
(21) Application number: 10163969.8
(22) Date of filing: 26.05.2010
(51) Int. Cl.: G02F 1/1362

(54) **A method for manufacturing a display panel and a display panel provided with repairable elements.**

(30) Priority: 27.05.2009 NL 2002936
(71) Applicant: Polymer Vision Limited, 5656 AE Eindhoven (NL)
(72) Inventor: van Aerle, Nicolaas Aldegonda Jan Maria, 5629 NL, Eindhoven (NL); van Grinsven, Paulus Joseph Gerardus Marie, 6132 TM, Sittard (NL); van Lieshout, Petrus Johannes Gerardus, 5741 EA, Beek en Donk (NL); Maas, Joris Pieter Valentijn, 5281 BC, Boxtel (NL); Manders, Wilhelmus Hubertus, 6122 AS, Buchten (NL); Schildermans, Johan, B-3820, Lommel (BE); van Veenendaal, Erik, 5612 DM, Eindhoven (NL)
(74) Representative: Hatzmann, Martin

(57) **Abstract**

The invention relates to a display panel provided with a picture element controllable by an active matrix drive comprising at least one structural element (a), wherein the at least one structural element (a) comprises a plurality of sub-units (b1, b2, b3) whose electrical connectivity (c1, c2, c3) is alterable for repairing of an electrical malformation related to the structural element (a).

## Description

### FIELD

The invention relates to a display panel controllable by an active matrix drive comprising a structural element, said display panel being provided with means for enabling repair of malformations in electrical connectivity related to the structural element. The invention further relates to a method of manufacturing a display panel controllable by an active matrix drive.

### BACKGROUND OF THE INVENTION

An embodiment of a display panel as is set forth in the opening paragraph is known from US 6 327 007 B1. The known display panel relates to a liquid crystal display (LCD) array comprising a substrate, a plurality of gate lines on the substrate, a plurality of data lines on the substrate, an active display region having a plurality of pixels defined by the plurality of gate lines and data lines, and at least two repair lines partially positioned on the active display region and separated from each other. The repair lines are constructed in respective closed loops being mutually displaced and being electrically connected in parallel to each other by means of bridge structures. At least one of the bridge structures is positioned under one of the plurality of gate lines with a first insulating layer therebetween. The loop is formed by two longitudinal lines and two transverse lines which are arranged substantially in parallel to respective geometrical borders of the display area. The longitudinal lines are located in the non-display region or outside the active display region without overlapping the data lines. The transverse line has a protrusion in a first region under the data line, said first region being different from a second region where the gate line is arranged. The bridge structure interconnecting the loops extends over corresponding longitudinal lines of the adjacent repair lines while a second insulating layer is arranged between the bridge structure and the repair line.

In case when a data line has an electric malformation, for example an opening, it can be repaired by electrically connecting the end portions of the data line to respective suitable repair lines from the provided loop thereby providing an alternative path for a signal. Then the original loop is cut for enabling a proper electrical circuitry.

### SUMMARY OF THE INVENTION

It is a disadvantage of the known display structure as described in US 6 327 007 B1 that only electrically interrupted lines may be repaired. It is an additional disadvantage of the known display panel that electrically conducting repair lines are separated from the gate and data lines of the active matrix by an additional electrical insulating layer. Possible defects in additional insulating layer may lead to unwanted shorts.

It is an object of the invention to provide a display panel controllable by an active matrix drive, whose electrical malformations may easily and reliably be repaired without inducing undue complexity to layer architecture of the display panel.

To this end, according to the invention, in the display panel controllable by an active matrix drive comprising at least one structural element, the at least one structural element comprises a plurality of sub-units whose electrical connectivity is alterable for repairing of an electrical malformation related to the structural element.

The technical measure of the invention is based on the insight that by suitably multiplexing a structural element by providing a plurality of sub-units or sub-portions thereof, an electrical malformation, like an opening in an electrical circuitry or a short in the electrical circuitry may easily and reliably be repaired. The plurality of the sub-units or sub-portions may be at least partially integrated in the electrical circuitry of the active matrix drive so that a sole operation, for example, cutting in case of a short or connecting in case of an opening, is sufficient for repair.

It is an advantage of the display panel according to the invention that use is made of electrically insulating layers present in the architecture of the display layer for enabling repair possibilities and, therefore, no additional electrically insulating layers are necessary.

It will be appreciated that in the display panel known from US 6 327 007 B1 the repair loop is an autonomous structure being not at least partially electrically connected to either the gate line or the data line thereby necessitating first a proper connection of a data line or a gate line to the repair loop followed by cutting of the loop for enabling a proper electrical path. In addition, the known repair loop is not suitable for repairing short in the electrical circuitry of the active matrix drive.

Another embodiment of a display panel as is set forth in the opening paragraph is known from US 5 744 821. In this embodiment, open data lines can be repaired using the so-called electrically conducting black matrix layer as is needed in LCD displays having a backlight to prevent backlight shining through not-switchable pixel areas. The black matrix layer is based on an opaque conducting area, that is separated from the gate electrode layer and from the source and drain electrode layer by one or more insulating layers.

It is a disadvantage of the known display structure as described in US 5 744 821, that it assumes the use of a black matrix layer in combination with an insulating layer, separating the electrically conducting black matrix layer from the gate layer and the source and drain layer. In many display types, however, such a black matrix layer is not needed and not used.

Still another embodiment of a display panel as is set forth in the opening paragraph is known from US 2007 / 0224742 A1. In this embodiment a portion of the pixel electrode is located above the data line, the data line having a repairing portion extending from the line. In case the pixel electrode is disconnected from the active matrix switch, the repairing portion of the data line can be utilized to electrically connect the pixel electrode to the data line.

It is a disadvantage of the known display structure as described in US 2007 / 0224742 A1 that after being repaired by connecting the pixel electrode to the data line, the pixel unit will change continuously with the high frequency caused by the driving signal of the data line. Hence the information presented by the repaired pixel will be an average of the information on the column line of the display.

In an embodiment of the display panel according to the invention the at least one structural element is selectable from a group of: a storage capacitor, an active element, an electrically conducting line or an electrically conducting pixel electrode region. Various examples of active elements can be given, like for example diodes (including TFDs (Thin Film Diodes)), FETs (Field Effect Transistors), MIM (Metal-Insulator-Metal)-switches, and optical switches. One type of FET that is often used is the so-called TFT (Thin Film Transistor)

It is found that by suitably multiplexing one or more of these structures, electrical malformations in the electrical circuitry of the active matrix drive may easily be repaired without inducing undue degradation of electrical properties of the active matrix drive.

For example, in an embodiment of a display panel according the invention, the at least one structural element may relate to a storage capacitor, the storage capacitor being arranged as a plurality of capacitive units electrically interconnected by repair lines.

As a result, when a shortcut is detected in one of the capacitive units, the capacitive unit may be disconnected by cutting, for example by laser cutting, not interfering with further capacitive units. This leads merely to a slight decrease of an integral value of the storage capacitance. This is advantageous with respect to a commonly applied repair procedure wherein a shortcut capacitance is disconnected in its entirety.

In a further exemplary embodiment of the display panel according the invention the at least one structural element relates to an active element like for example a TFT, wherein a first TFT and at least a second TFT are provided, wherein at least one TFT is electrically redundant.

In general, each pixel of the display panel is commonly provided with a single TFT for driving the pixel, with a given channel width W and a channel length L. The source is the electrode connected to the data line, also referred to as column line. The drain is connected to the pixel electrode. The gate is connected to the gate line, also referred to as row line, or select line, or scan line. A short created inside the TFT can lead to a short between the gate and the source resulting in line defect; or a short between the source and drain resulting in a pixel defect, or a short between the gate and drain resulting in a pixel defect. In accordance with the invention the TFT structure is multiplexed by providing at least two TFT structures, one of which may be electrically redundant. It will be appreciated that the term 'electrically redundant' used in the context of the present application relates either to a structure which is at least partially connected to existing electrical circuitry of the active matrix drive, or a structure which fully forms an electric path in the electrical circuitry of the active matrix drive.

Preferably, a TFT structure is multiplexed by sub-dividing a single TFT structure yielding the first TFT and at least the second TFT. For example, a single TFT, having a channel width W and channel length L may be subdivided into x smaller TFTs, for example, each having a channel width W/x and a channel length L. In this way the multiplexed TFT forms part of existing electrical circuitry of the active matrix drive, which may minimize a number of operations necessary for repairing a short associated with the TFT structure. Alternatively, it is not necessary to have a sub-division into a multiple of identical smaller TFTs, any division into multiple numbers of TFTs that add up to a total channel width (W) over channel length (L) ratio is possible. For example a single TFT with a W/L ratio of 500micrometer/5micrometer

(W/L=500/5=100/1) can be divided into 4 identical TFTs each having a W/L ratio of 125micrometer/5micrometer in parallel or into for example 3 different TFTs in parallel the first of which having a W/L ratio of 150micrometer/7.5micrometer, the second having a W/L ratio of 250micrometer/5micrometer and the third having a W/L ratio of 300micrometer/10micrometer.

It will be appreciated that an absolute dimension of a short in electrical circuitry may have a greater value than a dimension of a TFT structure making it difficult to enable repair thereof in an easy way. In accordance with a further embodiment of the display panel according to the invention, the first TFT and at least the second TFT are mutually displaced by a distance along a gate line, said distance being larger than a dimension of the TFT along the gate line. Alternatively or additionally, the first TFT and at least the second TFT may be mutually displaced by a distance along a data line, said distance being larger than a dimension of the TFT along the data line. In these ways laser repair by cutting off either a first TFT or the second TFT may easily be implemented without damaging electrical integrity of further components of the active matrix drive.

In a still further embodiment of the display panel according to the invention the at least one structural element comprises the electrically conductive line provided with portions interconnected in a loop.

It is found that another origin of defects may arise from shorts between crossing gate lines and source lines. In the state of the art no solution for this problem is provided so far. In particular, known solutions comprise providing an additional layer between a gate line and a drain line, which is possible for TFTs wherein a semiconductor layer is arranged between the gate and the source/drain layer. For coplanar structured TFTs, for example for bottom-gate or for top-gate TFTs, additional processing steps are required in order to make crossings less susceptible to shorts and to enable repair possibilities.

In accordance with the invention, a portion of the line in a region of the crossing is multiplexed by a closed loop enabling electrical repair of a short in the crossing by cutting one of the loop arms.

In a still further embodiment of the display panel according to the invention, the pixel electrode is connected to a drain of the TFT and is provided with two or more sub-pixel segments electrically interconnected by repair lines.

It is possible that a short is created between neighboring pixel electrodes. A conventional repair method, as known from the art, usually comprises an extensive laser cut along a curved line dissecting a short pixel portion. In accordance with the invention, the pixel electrode is provided with two or more sub-pixel segments electrically interconnected by repair lines. As a result a simple repair of electrical short is envisaged by dissecting a short-cut pixel segment through cutting of a corresponding repair line.

Preferably, the display panel according to the invention relates to a reflective display type or a top-emitting Organic Light Emitting Diode (OLED) display type.

This feature is based on the understanding that the backplane of a display panel operable by an active matrix drive contains a plurality of pixel units which drive the display effect layer, for example a reflective electrophoretic display effect, or a reflective Liquid Crystal Display effect, or a reflective electrowetting display effect, or a reflective cholesteric Liquid Crystal effect. The active matrix drive, also referred to as active matrix backplane, comprises a stack of different layers, wherein the top display effect layer may comprise about 95% of the total display area and may substantially cover different layers of the backplane. Usually, the backplane comprises a storage capacitor, a column line, a row line, an active element, like for example a TFT and a pixel electrode connected to the active element which can cover the storage capacitor, the column line, the row line and the active element. The reflective display does not have a limitation regarding spatial constrains for placing repairable structures. Therefore, particularly for the reflective displays the structural elements of the active matrix drive may easily be multiplexed for enabling a simple and reliable repair of an electrical malformation associated with a structural element. In addition, the picture element according to the terms of the present application may relate to a pixel or a dot (also referred to as sub-pixel), the latter being applicable to color displays.

It is preferred to design the active matrix drive in a way that the repair locations are positioned in regions that do not interfere with critical layers underneath or on top of the repair locations. By defining the actual repair locations at which cutting or welding is done in case repair is needed, one is able to ensure that no critical layers are located underneath or on top of the potential cutting or welding positions. In this way the risk of creating unwanted cutting or welding of other critical layers is eliminated.

In a further embodiment of the display panel according to the invention a first electrode layer superposed by a second electrode layer, said layers being electrically isolated by a dielectric layer, wherein the at least one structural element relates to a electrode region of the first electrode layer and/or the second electrode layer, the electrode region of the first electrode layer being partially overlapping with the electrode region of the second electrode layer.

In the backplane of the display panel each electrode layer usually defines several parts of the electronics circuit. For example, a first electrode layer may define part of the storage capacitor, the gate pad of the TFT and the gate line; while a second electrode layer may define the source and drain pads of the TFT, part of the storage capacitor and the source line. In manufacturing, it is possible that unwanted lateral shorts occur within a single electrode layer. In accordance with the invention redundant electrode regions in the first layer may be created, said regions being at least partially overlapping with the second electrode and being electrically isolated there from by a dielectric layer. When a lateral short occurs in the first electrode layer it is possible to repair it by disconnecting a defective part in the first layer by laser cutting in suitable areas of the first layer and by creating a shunt contact using the second layer in the region of overlap. This embodiment will be discussed in more detail with reference to Figures. It will be appreciated than such overlap may be envisaged either for the gate line and the source line.

A method of manufacturing a display panel comprising a picture element controllable by an active matrix drive comprising at least one structural element, comprises the step of providing the at least one structural element with at least one redundant unit or at least one redundant unit, wherein electrical connectivity of such at least one sub-unit or at least one redundant unit is alterable for repairing of an electrical malformation related to the structural element.

In a further advantageous embodiment of the method according to the invention the at least one structural element is selectable from a group of: a storage capacitor, an active element, an electrically conductive line or an electrically conductive pixel electrode region.

In another advantageous embodiment of the method according to the invention the step of altering comprises electrically disconnecting and/or electrically connecting

These and other aspects of the invention will be further discussed with reference to Figures wherein like reference signs relate to like elements. It will be appreciated that Figures are presented for illustrative purposes and may not be used for limiting the scope of the appended claims.

### BRIEF DESCRIPTION OF THE FIGURES

Figure 1 presents a schematic view of embodiments of respective backplanes of display panels suitable for practicing the invention.
Figure 2 presents a schematic view of an embodiment of a portion of a display panel according to the invention.
Figure 3 presents a schematic view of a further embodiment of a portion of a display panel according to the invention.
Figure 4 presents a schematic view of a still further embodiment of a portion of a display panel according to the invention.
Figure 5 presents a schematic view of a still further embodiment of a portion of a display panel according to the invention.
Figure 6 presents a schematic view of a still further embodiment of a portion of a display panel according to the invention.
Figure 7 presents a schematic view of a still further embodiment of a portion of a display panel according to the invention.

### DETAILED DESCRIPTION OF THE FIGURES

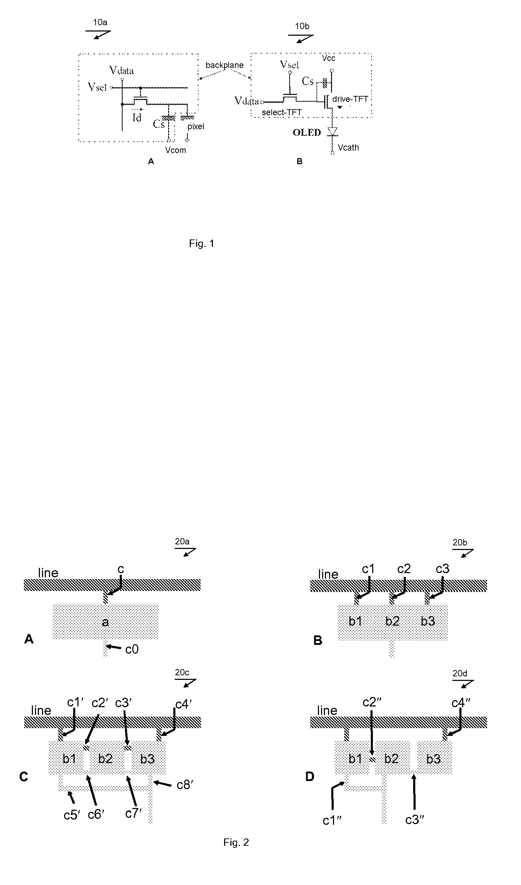

Figure 1 presents a schematic view of embodiments of respective backplanes of display panels suitable for practicing the invention. A typical backplane contains a plurality of pixel units to drive a display. For example, when for the display an electrophoretic display medium is used, the backplane may comprise a suitable plurality of pixel units to drive capsules of the electrophoretic display medium. The active matrix backplane may comprise of a stack of different layers, the top layer of which (referred to as pixel electrode) may contact the electrophoretic effect and is defining the area of the different pixel units. This top layer may consist of over 95% of the total display area, and it usually covers the different layers underneath, like the storage capacitor, the source line (also referred to as data line or column line), the row line (also referred to as select line, scan line, or more specifically gate line in case a transistor is used as active element) and the active element, like for example a thin film transistor (TFT). Item 10a, shown in Figure 1, presents a schematic diagram of the pixel circuit as may be used for driving an electrophoretic display.

The different layers may be manufactured in a process, in which small defects may occur due to particles, impurities or other artefacts in the process and the materials used. These defects can lead to problems like broken conducting lines, unwanted conducting areas or unwanted open spots in dielectric layers. All these problems can lead to defective pixels, resulting in a pixel unit or a series of pixel units to be continuously on or off, or a pixel unit that displays the same information as the neighbouring pixel unit to which it is connected via an electrical short.

Defects can occur due to, for example,
a) a defect between different electrodes; for example:
   two electrodes constituting the storage capacitor, which may result in a vertical short;
   a row line and a column line, which may result in a vertical short;
   a row line and a pixel electrode, which may result in a vertical short;
   a column line and a pixel electrode, which may result in a vertical short;
   a gate electrode and a source electrode within the TFT area, which may result in a vertical short;
   a gate electrode and a drain or a pixel electrode within the TFT area, which may result in a vertical short;
   a source and the a drain electrode within the TFT area, which may result in a lateral short;
   neighbouring pixel electrodes, which may result in a lateral short;
   neighbouring column lines, which may result in a lateral short;
   neighbouring row lines, which may result in a lateral short
      or
b) unwanted open area in a row line or a column line or any other conductor
   or
c) unwanted open areas in insulating dielectric layers which separate two conducting layers, which may result in a vertical short.

In general, a storage capacitor is included in each pixel element to reduce voltage leakage inside the pixel, either due to the off-current of the TFT or due to leakage within the pixel through the display medium. For a conventional Active Matrix-Liquid Crystal Display (AM-LCD) a ratio of pixel capacitance versus storage capacitance amounts roughly 1:1 as the resistance of an LC layer is high enough to avoid too much leakage. In case of an electrophoretic display, however, the resistance of the electrophoretic capsule is rather low, resulting in the need for a substantially larger storage capacity, resulting in a ratio of between the capacitance of the electrophoretic capsule and storage capacitance of up to 1:20. Using other display effects like the so-called electrowetting, switching between two different states will change the pixel capacitance strongly, which can create unwanted electrical and optical artefacts. By adding a large storage capacitor to each pixel the large variation in capacitance during switching between two states can be damped. A larger storage capacitor results in a design with a larger overlapping area between two electrodes constituting the capacitor. This increases the risk of short circuit between the electrodes of the capacitor.

Another type of display that can be used is called top-emitting Organic Light Emitting Diode (OLED) display. For displays having many pixels, OLED displays are also driven using an active matrix backplane. An example of a backplane circuit for an OLED-type display is given in item 10b of Figure 1.

The simplest layout of an active matrix OLED display contains pixels having a 2T-1C circuit each, i.e. two TFTs (a drive-TFT and a select-TFT) and a storage capacitor 'Cs', as shown in Figure 1, item 10b. The top of the backplane contains the anode electrode of the OLED device, on top of which the OLED stack is processed. During display operation a pulsed bias voltage 'Vsel' is applied to the gate of the select-TFT, turning the select-TFT on and enabling a simultaneous data pulse 'Vdata' to be applied to the gate of the drive-TFT. The drive-TFT is turned on and current can flow through the OLED, thus emitting light. The storage capacitor 'Cs' retains the gate bias on the drive-TFT until the pixel is again selected, one frame time later. Often a fixed bias voltage is applied on 'Vcc' and 'Vcath', typically Vcc-Vcath-20V. In a top-emitting OLED the light escapes through the top layer of the device so it does not need to pass through the active matrix backplane. This greatly increases the active LED layer within each pixel. In this case a transparent electrode is used in combination with a large area of pixel electrode driven by the active matrix backplane. The pixel electrode defines the counter electrode layer and does not need to be transparent.

The circuitry of the active matrix backplane of the top-emitting OLED can also be optimized to enable repairability, as the light emission takes place away from of the pixel electrode defined by the backplane.

Figure 2, item 20a, presents a schematic view of an embodiment of a portion of a display panel according to the invention. In accordance with one aspect of the invention a large storage capacitor "a", being connected to further structures by lines c and c0, is divided into several smaller units b1, b2, b3 which can be separated by a laser repair step, the moment a short is observed inside the storage capacitor.

For example, turning to item 20b, the first electrode layer of the storage capacitor may be deposited in the same layer that defines the gate line and gate pad of the TFT; the second electrode layer may be defined in the same layer as the source and drain electrodes of the TFT. Between the first and second electrode layer a dielectric is placed to act as dielectric of the storage capacitor. In the prior art, item 20a, the storage capacitor is defined by area 'a'. When a short occurs between both electrodes a pixel defect is created. The only possible repair is removing the connection by applying a cut for example by a laser on position c or c0. The pixel is then separated from the storage capacitor, thus artefacts upon driving are introduced in the pixel that are otherwise strongly reduced by the storage capacitor. Trying to apply a cut in the overlapping area 'a' in item 20a will mostly result in additional shorts as the cutting will result in some kind of welding the two conducting layers.

In accordance with the invention, the storage capacitor comprises a series of smaller units b1, b2, b3 which can be cut off for example via a laser beam when a short circuit is present in a specific part of the storage capacitor. In items 20b, 20c and 20d examples are presented showing the storage capacitor split into 3 parts b1, b2, b3 in which the area 'a' equals the area of 'b1'+'b2'+'b3'. It will be appreciated that other number of smaller units can be used. The sub-units b1, b2, b3 do not need to be of the same size. In item 20b the first electrode layer is split into 3 separate units, each of them connected separately to a conducting line indicated 'line'; the second electrode layer defines a single area. In item 20c and item 20d the number of connections to the conducting line, indicated by 'line', is reduced, both the first and the second electrode layer are split into smaller parts each of them connected via a smaller area that can be cut. When a short between the first and second electrode occurs in for example part b3, a cut at position c3 in 20b separates the short circuit part from the rest of the intact storage capacitor, or alternatively a cut at position c3' and c4' or at c7' and c8' in 20c, or alternatively a cut at position c3" or c4" in 20d. In this way only a small reduction in storage capacitor occurs, hence the switching behaviour of the pixel is less affected. When a short between the first and second electrode occurs in for example part b2, a cut at position c2 in 20b separates the short circuit part from the rest of the intact storage capacitor, or alternatively a cut at position c2' and c3' or at positions c6' and c7' in 20c, or alternatively a cut at position c2" in 20d. When a short between the first and second electrode occurs in for example part b1, a cut at position c1 in 20b separates the short circuit part from the rest of the intact storage capacitor, or alternatively a cut at position c1'and c2' or at positions c5' and c6' in 20c, or alternatively a cut at position c1" in 20d. In this way only a small reduction in storage capacitor occurs, hence the switching behavior of the pixel is less affected. Preferably, the active matrix drive structure is designed in such a way that no critical layers are positioned underneath or on top of the regions that can be cut.

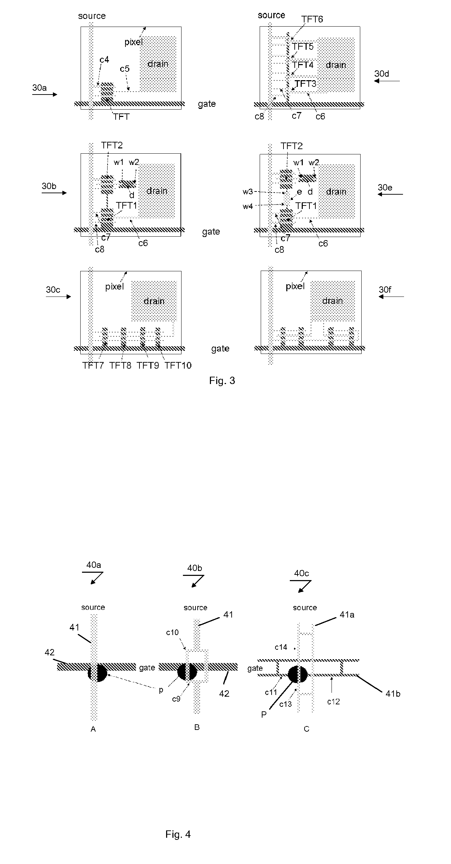

Figure 3 presents a schematic view of a further embodiment of a portion of a display panel according to the invention. In general each pixel may be provided with an active element, like for example a diode (including TFD (Thin Film Diode)), a FET (Field Effect Transistor), a MIM (Metal-Insulator-Metal)-switche, and an optical switch. One type of FET that is often used in displays is the so-called Thin Film Transistor (TFT). The following embodiment described uses a TFT, but for a person skilled in the art is must be obvious that the generic solution also applies to the other active elements mentioned. In more generic terms a gate line can be referred to as a row line, whereas a data line can be referred to as a column line. In general each pixel may be provided with a single TFT for driving the pixel, with a given channel width W and channel length L. When a short is created inside the TFT this can lead to a short between the gate and source resulting in a line defect; or a short between the source and drain resulting in a pixel defect; or a short between the gate and drain resulting in a pixel defect. Often the TFT is provided using multiple source and/or drain fingers. When a short is created in the TFT, one of the source or drain fingers can be separated by laser cutting, as for example indicated in 30a at c4 position. This, however, will lead to a reduction in on-current of the TFT. Often the shorting area is relatively large compared to the size of the TFT, due to which laser repair is not possible within a single TFT, see 30a.

It will be appreciated that just adding a second TFT will increase the kick-back due to an increase in stray capacitance between the gate and drain electrode. This may lead to optical artefacts. In addition, placing a second TFT close to the first TFT increases the risk that the shorting area covers both TFTs, due to which no repair is possible.

As a result, a design, shown in 30b, provides a solution to overcome both problems whilst having a repair possibility the moment a short occurs in the TFT. Each pixel is provided with 2 TFTs one of which (TFT2) may be not yet connected to the drain. In addition, a small conducting pad 'd' may be provided in the first electrode layer, partly overlapping the drain of the pixel and the drain finger of the TFT2. In case a short appears in the connected TFT1; this TFT1 can be disconnected by a cut at position c6 only in case a short is formed between gate and drain, or cutting c7 and/or c8 in case a short is formed between the source and gate. This is followed by connecting TFT2 to the drain via the pad 'd' by laser welding at positions w1 and w2. It is also possible to have one of the two connections w1 or w2 already made applying a contact hole in the dielectric layer between the two electrode layers, thus only requiring applying laser welding at the non-contacted area w2 or w1. In Figure 3 the semiconductor is not shown. In addition an open defect in the source and/or drain finger in TFT1 can be solved by cutting of TFT1 and connecting TFT2.

An embodiment, shown in item 30e depicts an alternative embodiment of the embodiment 30b. In this case the gate pad of the TFT2 is not connected to the gate yet. In this design the kickback effect is also kept low. Also arrangement 30e provides a solution to overcome both problems, namely repair and reduced kick-back, whilst having a repair possibility the moment a short occurs in the TFT1. Each pixel is provided with two TFTs one of which (TFT2) may be not yet connected to the drain and/or may be not yet connected to the gate. In addition, two small conducting pads are provided, one in the first electrode layer ('d') partly overlapping the drain of the pixel and the drain finger of the TFT2 and the other in the second electrode layer ('e') partly overlapping gate. In case a short appears in the connected TFT1; TFT1 can be disconnected by laser cut at position c6 only in case a short is formed between gate and drain, or cutting c7 and/or c8 in case a short is formed between the source and gate. This is followed by connecting TFT2 to the drain via the pad 'd' by laser welding at positions w1 and w2 and connecting the gate pad of TFT2 by welding w3 and w4. It is also possible to have one of the two connections w1 or w2 already made applying a contact hole in the dielectric layer between the two electrode layers, thus only requiring applying laser welding at the non-contacted area w2 or w1. In addition, it is also possible to have one of the two connections w3 or w4 already made applying a contact hole in the dielectric layer between the two electrode layers, thus only requiring applying laser welding at the non-contacted area w4 or w3. In addition, an open defect in the source and or drain finger of TFT1 can be solved by cutting of TFT1 and connecting TFT2.

Another possibility to avoid defects caused by relative large areas of potential shorting, is to distribute a TFT by splitting the TFT (having a channel width W and channel length L) into x smaller TFTs (each having a channel width W/x and channel length L) and placing them at some distance from each other. An example of placing a multiple of smaller TFTs in parallel is shown in item 30d. In case one of the four TFTs is shorted, it can be cut off, leaving the other three TFTs functional, hence the impact on the required on-current and the kick-back is limited.

Alternatively, redundancy can also be established using parallel TFTs, as shown in items 30c and 30f. A single TFT as shown in 30a is sub divided into a suitable plurality of TFTs, for example four TFTs as shown in item 30c, TFT7,TFT8,TFT9, TFT10. In principle, it is also possible to split the original single TFT (having a channel width W and channel length L) into x smaller TFTs (each having a channel width W/x and channel length L) and to place them at some distance from each other along the gate line. In case a short occurs in one of the four TFTs, laser cutting can separate the short TFT part whilst keeping the other TFTs operational. Depending on the type of short circuit, one can apply a laser cut between the gate pad of the short circuited TFT and the gate line, or apply a laser cut at one of the source fingers or at the drain finger. Item 30f schematically depicts another embodiment applying the same principle.

Figure 4 presents a schematic view of a still further embodiment of a portion of a display panel according to the invention. Another origin of defects can arise from a short between crossing gate and source lines, see item 40a (prior art). In general, no option exists to repair such a defect. In accordance with the invention, it is proposed to apply a structure as shown in items 40b and 40c, wherein a source and/or a gate line comprise a suitable loop of conductors comprising bridges, which can be easily cut during repair to surpass the shorting area p. In case of item 40b, a short between source and gate line can be fixed by applying a laser cut at positions 'c9' and 'c10'. Item 40c shows another embodiment, in which a short between gate and source line can be repaired by cutting on positions 'c11' and 'c12' in the gate line or on positions 'c13' and 'c14' in the source line.

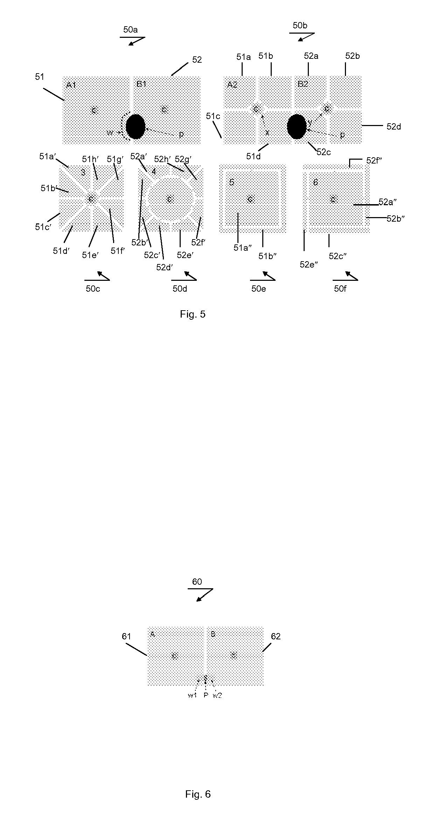

Figure 5 presents a schematic view of a still further embodiment of a portion of a display panel according to the invention. In case a shorting area 'p' is formed between neighbouring pixel electrodes as shown schematically in Figure 5 between pixel electrodes A1 and B1 (see item 50a); a conventional way of repair is using an extensive laser cut 'w'. This type of laser cut is difficult to automate without the use of an expensive vision system.

The invention is based on the insight that it may be easier to perform automated laser repair when fixed repair areas are defined that can be laser cut the moment a short is detected. In accordance with the invention (see item 50b) a pixel comprises sub-pixels 51a, 51b, 51c, 51d and 52a, 52b, 52c, 52d which can be disconnected by a laser beam, without the need for an extensive laser beam cut process. This will decrease the required repair time, and hence increase the repair speed. Also in this figure, 'p' refers to an area leading to a short between neighbouring pixels pads. Reference 'c' indicated the part of the pixel electrodes that is contacted to the drain of the TFT underneath the pixel electrode. All sub-pixels defining a single pixel are connected to the same drain of the TFT switch (not shown) via a contact 'c'. It will be appreciated that a great number of variations is possible. Further alternative exemplary embodiments 50c, 50d may comprise, for example, a pixel split into eight sub-units, 51a', ..., 51h' and 52a', ..., 52h'. Still alternatively (see item 50e) it is possible to split the pixel electrode in just two regions having a peripheral area 51b" and a central pixel electrode area 51a". Still alternatively (see item 50f), it is possible to split the pixel electrode into a central part 52a" and the peripheral area into a desired number of sub-units, for example 4, see items 52b", 52c", 52d" and 52e". As a result, the most simple form enables repair by laser cutting only a small area of the pixel electrode, like indicated by 'x' and 'y' in Figure 5.

By splitting each pixel electrode into smaller inter-connected sub-units, all of which are connected to the drain of the TFT, it is possible to disconnect such a small pixel portion, that it is not visible anymore to the bare human eye thereby not affecting perceptible characteristics of the display panel according to the invention.

Figure 6 presents a schematic view of a still further embodiment 60 of a portion of a display panel according to the invention. In accordance to the invention, it is also possible to add conducting pads 'P' that overlap neighbouring pixel electrodes 'A' and 'B', also indicated by 61 and 62, which are separated from the actual pixel electrodes by an insulating layer. For example, in case one pixel electrodes can not be driven due to some open circuit between the TFT drain and the pixel electrode or due to defective TFT or other reason. In such a case the non-driven pixel electrode can be shorted to one of its neighbours via laser welding at position 'w1' and 'w2', shown in Figure 6. One can consider to apply such conducting pads between each neighbouring pixel both in the row (horizontal) direction or in the column (vertical) direction.

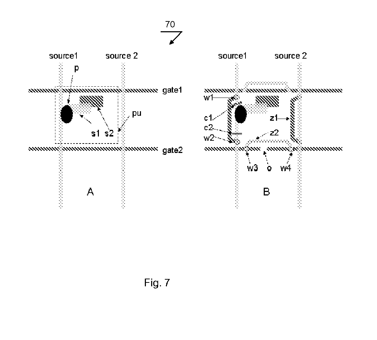

Figure 7 presents a schematic view of a still further embodiment of a portion of a display panel according to the invention. In the backplane 70 each electrode layer defines several parts of the electronics circuit. For example the first electrode layer may define part of the storage capacitor, the gate pad of the TFT and the gate line; the second electrode layer may define the source and drain pads of the TFT, part of the storage capacitor and the source line. In manufacturing it is possible that unwanted lateral shorts occur within a single electrode layer (e.g., indicated by 'p'). A proposal is made to create redundant electrode regions in layer 'a' that partly overlaps electrode regions in layer 'b' and vice versa, indicated in view B as 'z1' and 'z2' . When a lateral short occurs in electrode layer 'a' it is possible to repair it by disconnecting the defective part in 'a' by laser cutting for example at position 'c1' and 'c2' in view B and creating a shunt contact using electrode layer 'b' area via laser welding at position 'w1' and 'w2' in view B. This can be done for both the gate line and the source line.

It is possible to optimize the wiring of the non-connected conductor with respect to the actual 'floorplan' of the various structures within the same electrode layer. For example region 's1' is in the same electrode layer as the column line, but this region should not directly contact the column line. Region 's2' may be located in the same layer as the row line.

This approach is also applicable in cases conventional laser cutting may lead to unwanted damage of structures that are located below the area that needs to be cut.

As shown in view B the proposed repair structure can also be used to repair a broken (also called 'open') line. Suppose 'gate2' line is broken at positions 'o'. This open can be repaired using 'z2' structure and laser weld this structure to 'gate2' at positions 'w3' and 'w4'.

The above solutions can be used for active matrix based TFT arrays, either using inorganic or organic semiconducting material. Most commonly used metals are gold (Au); aluminum (Al), chromium (Cr), molybdenum (Mo), tantalum (Ta), tungsten (W), copper (Cu), titanium (Ti), manganese (Mn), nickel (Ni), niobium (Nb), neodymium (Nd) silver (Ag) or multilayer of different of the mentioned metals or alloys of metals. Even though, in the description a reference is made to pixels, it will be appreciated than any picture element may fall under this definition, in particular, conventional pixels or dots, like used in a color display are contemplated herewith.

It will further be appreciated that laser repair, as discussed above, is often done using a laser like a pulsed YAG laser, operating at 1.06µm wavelength using pulses of 8 ns, having a power density of 20∼60 W/ µm². Alternatively a dye type laser tunable to a range of different wavelengths from 0.34 to 1.2 µm can be used.

It will be appreciated that while specific embodiments of the invention have been described above, that the invention may be practiced otherwise than as described. In addition, isolated features discussed with reference to different embodiments may be combined.

## Claims

1. A display panel provided with a picture element controllable by an active matrix drive comprising at least one structural element, wherein the at least one structural element comprises a plurality of sub-units whose electrical connectivity is alterable for repairing of an electrical malformation related to the structural element.

2. A display panel according to claim 1, wherein the at least one structural element is selectable from a group consisting of: a storage capacitor, an active element, an electrically conducting line or an electrically conducting pixel electrode region.

3. A display panel according to claim 2, wherein the active element is selectable from a group of a diode, a Thin Film Diode (TFD), a Field Effect Transistor (FET), a Thin Film Transistor (TFT), a Metal-Insulator-Metal (MIM)-switch or an optical switch.

4. A display panel according to claim 1 or 2 or 3, in which the repair locations are positioned in regions that do not interfere with critical layers underneath or on top of the repair locations.

5. A display panel according to claim 2, wherein the at least one structural element relates to a storage capacitor, the storage capacitor being arranged as a plurality of capacitive units electrically interconnected by repair lines.

6. A display panel according to claim 2 or 3, wherein the at least one structural element relates to an active element, wherein a first active element and at least a second active element are provided, wherein at least one active element is electrically redundant.

7. A display panel according to claim 6, wherein the first active element and at least the second active element are provided by sub-dividing a single active element structure.

8. A display panel according to claim 6 or 7, wherein the first active element and at least the second active element are mutually displaced by a distance along a row line, said distance being larger than a dimension of the active element along the row line.

9. A display panel according to claim 6 or 7, wherein the first active element and at least the second active element are mutually displaced by a distance along a data line, said distance being larger than a dimension of the active element along the data line.

10. A display panel according to claim 2, wherein the at least one structural element comprises the electrically conductive line provided with portions interconnected in a loop.

11. A display panel according to any of the preceding claims, wherein the pixel electrode is connected to a drain of the active element and is provided with two or more sub-pixel segments electrically interconnected by repair lines.

12. A display panel according to any one of the preceding claims,
wherein the display is reflective type or top-emitting OLED type.

13. A display panel according to claim 1 or 2, comprising:
- a first pixel electrode layer superposed by a second pixel electrode layer, said layers being electrically isolated by a dielectric layer, wherein
- the at least one structural element relates to a pixel electrode region of the first pixel electrode layer and/or the second pixel electrode layer,
- the pixel electrode region of the first pixel electrode layer being partially overlapping with the pixel electrode region of the second pixel electrode layer.

14. A display panel according to any one of the preceding claims,
wherein the picture elements relates to a pixel or a dot.

15. A method of manufacturing a display panel comprising a picture element controllable by an active matrix drive comprising at least one structural element, the method comprising the step of providing the at least one structural element with at least one sub-unit or at least one redundant unit, wherein electrical connectivity of such at least one sub-unit or at least one redundant unit is alterable for repairing of an electrical malformation related to the structural element.
